# EUROPÄISCHE PATENTSCHRIFT

(11) **EP 2 478 988 B1**
(45) Veröffentlichungstag und Bekanntmachung des Hinweises auf die Patenterteilung: **23.08.2017**
(21) Anmeldenummer: 12150342.9
(22) Anmeldetag: 06.01.2012
(51) Int. Cl.: B23K 9/18, B23K 35/30, C22C 38/00, C22C 38/02, C22C 38/04, C22C 38/44, C22C 38/46

(54) **Schweisszusatzwerkstoff aus Eisenlegierung**
Filler material for welding based on iron
Matériau d'apport de soudage basé sur le fer

(30) Priorität: 20.01.2011 CH 992011
(43) Veröffentlichungstag der Anmeldung: 25.07.2012
(73) Patentinhaber: Ansaldo Energia Switzerland AG, 5401 Baden (CH)
(72) Erfinder: Nazmy, Mohamed Youssef, 5442 Fislisbach (CH); Gerdes, Claus Paul, 5406 Rütihof (CH); Künzler, Andreas, 5400 Baden (CH); Keller, Sorin, 5452 Oberrohrdorf (CH)
(74) Vertreter: Bernotti, Andrea

(56) Entgegenhaltungen:
- EP-A1- 1 466 993
- EP-A1- 2 221 393
- JP-A- 2006 077 330
- DATABASE WPI Week 198428 Thomson Scientific, London, GB; AN 1984-173110 XP002635538, -& JP 59 093857 A (TOKYO SHIBAURA DENKI KK) 30. Mai 1984 (1984-05-30)

## Beschreibung

### Technisches Gebiet

Die Erfindung bezieht sich auf das Gebiet der Werkstofftechnik. Sie betrifft einen Schweisszusatzwerkstoff auf der Basis von Stahl (siehe Anspruch 1), welcher sich durch eine verbesserte Schmelzfähigkeit beim Schweissen und eine höhere Zeitstandfestigkeit nach dem Erstarren gegenüber bekannten Schweisszusatzwerkstoffen auszeichnet.

### Stand der Technik

Es ist bekannt, Rotoren von thermischen Strömungsmaschinen, beispielsweise Gasturbinen, aus einzelnen Scheiben herzustellen, die dann miteinander verschweisst werden. Dazu wird beispielsweise von der Anmelderin schon seit Jahrzehnten ein Lichtbogen-Schmelzschweissverfahren/ Unterpulverschweissverfahren (UP) eingesetzt.
Um die Effizienz von Gasturbinen zu erhöhen werden diese u.a. bei extrem hohen Betriebstemperaturen gefahren. Die Rotoren müssen daher einerseits bei sehr hohen Temperaturen eine hohe Zeitstandfestigkeit und anderseits auch gute andere mechanische Eigenschaften sowie auch eine gute Oxidationsbeständigkeit aufweisen. Dies gilt selbstverständlich auch für die Schweissnähte, über welche die Rotorscheiben miteinander verbunden sind.
Aus dem Stand der Technik ist bekannt, für die UP-Schweissung derartiger Gasturbinenrotoren einen Schweisszusatzwerkstoff mit folgender chemischer Zusammensetzung (Angaben in Gew.- %) zu verwenden:
0.09-0.14 C, max. 0.40 S, max. 1.40 Mn, max. 0.025 P, max. 0.020 S, max. 11.00-12.50 Cr, 2.00-2.60 Ni, 0.95-1.80 Mo, 0.20-0.35 V, 0.020-0.055 N, Rest Eisen.
Dieser Schweisszusatzwerkstoff ist unter dem Namen SZW 3001-UP bekannt. Er wird als Draht geliefert, wobei die Zugfestigkeit des Schweissgutes im Bereich von 700 bis 1200 N/mm² liegt und die zulässige Abweichung der Festigkeit innerhalb einer Charge nicht mehr als +/- 50 N/mm² betragen darf. Dieser Schweisszusatzwerkstoff wird gemäss Lieferbedingungen für UP-Verbindungs- und Auftragsschweissungen verwendet.
Den hohen Anforderungen moderner Gasturbinen, insbesondere hinsichtlich der Hochtemperatureigenschaften, wie z. B. Kriech-/Zeitstandfestigkeit, wird dieses Material jedoch nicht mehr in jedem Falle gerecht.

Aus EP 2 221 393 A1 (Stand der Technik dieser Erfindung) ist ein Schweisszusatzwerkstoff mit verbesserten Eigenschaften bekannt, der zum Schweissen von Gasturbinenrotoren eingesetzt werden kann und folgende chemische Zusammensetzung (Angaben in Gew. -%) aufweist: 0.05-0.14 C, 8-13 Cr, 1-2.6 Ni, 0.5-1.9 Mo, 0.5-1.5 Mn, 0.15-0.5 Si, 0.2-0.4 V, 0-0.04 B, 2.1-4.0 Re, 0-0.07 Ta, 0-max. 60 ppm Pd, Rest Fe und herstellungsbedingte unvermeidbare Verunreinigungen. Eine weitere Verbessung der Eigenschaften dieses aus EP 2 221 393 A1 bekannten Schweisszusatzwerkstoffes, insbesondere hinsichtlich der Zähigkeitseigenschaften, ist wünschenswert.

Aus DATABASE WPI, Week 198428, Thomson Scientific, London,GB; AN 184-1733110, XP002635538 & JP 59 093857 A (TOKYO SHIBAURA DENKI KK) 30. May 1984 ist ein gegossener Chromstahl für Dampfturbinenkomponenten bekannt, der folgende Elemente enthält (in Gew.-%): 0.05-0.25 C, Si max. 0.70, 0.10-0.80 Mn, 1.0-3.0 Ni, 8.0-15.0 Cr, 0.30-1.20 Mo, 0.05-0.50 V, 0.01-0.3 Nb, 0.01-0.1 N, Rest Fe und Verunreinigungen. Durch die Bildung von V, Mo, Cr und Nb-Karbiden wird die Hochtemperaturzeitstandfestigkeit erhöht und die Zähgigkeit wird verbessert durch Ni, Mo, Nb und N ohne die Bildung von Delta-Ferrite.

### Darstellung der Erfindung

Ziel der Erfindung ist es, die genannten Nachteile des Standes der Technik zu vermeiden. Der Erfindung liegt die Aufgabe zu Grunde, einen hochtemperaturbeständigen Schweisszusatzwerkstoff auf der Basis von Stahl zu entwickeln, welcher neben einer guten Schmelzfähigkeit beim Schweissen und einer hohen Zeitstandfestigkeit nach dem Erstarren auch gute Zähigkeitseigenschaften sowie eine gute Oxidationsbeständigkeit gegenüber bekannten Schweisszusatzwerkstoffen aufweist.

Erfindungsgemäss wird diese Aufgabe dadurch gelöst, dass der Schweisszusatzwerkstoff folgende chemische Zusammensetzung (Angaben in Gew.- %) aufweist:
0.05-0.15 C,
10 Cr,
3-4 Ni,
0.5-1.9 Mo,
0.5-1.5 Mn,
0.2-0.3 Si,
0.2-0.4 V,
0-0.04 B,
1-3 Re,
0.001-0.07 Ta,
0.01-0.06 N,
0-60 ppm Pd,
max. 0.25 P,
max. 0.02 S,
Rest Fe und herstellungsbedingte unvermeidbare Verunreinigungen.

Im Vergleich zu den aus dem Stand der Technik bekannten und als Schweisszusatzwerkstoff verwendeten Materialien zeichnet sich das erfindungsgemässe Material durch ein extrem verbessertes Zeitstandverhalten sowie eine stark verbesserte Kerbschlagzähigkeit aus. Bei einer geringen Verbesserung der Bruchdehnungswerte sind im Zugversuch bei Raumtemperatur nur geringe Einbussen an Streckgrenze und Zugfestigkeit ermittelt worden.

Dies ist zurückzuführen auf die Kombination der Legierungsbestandteile in den angegebenen Bereichen.

Im Einzelnen ist dazu folgendes zu sagen:

Cr ist ein karbidbildendes Element, welches im angegebenen Bereich von 10 Gew.- %, die Oxidationsbeständigkeit erhöht, wobei höhere Werte zu unerwünschten Ausscheidungen führen, die nachteilig eine Versprödung des Materials verursachen.

Re ist ein Element, welches in den angegebenen Mengen von 1 bis 3 vorzugsweise von 2,25 Gew. %, sehr gut zur Mischkristallverfestigung beiträgt und dadurch zu guten Festigkeitswerten, insbesondere auch zu guten Zeitstandsfestigkeitswerten, führt.

B ist ein Element, welches in den angegebenen Mengen bis max. 0.04, vorzugsweise 0.01 Gew. %, die Korngrenzen verfestigt. Es stabilisiert ausserdem auch die Karbide. Höhere Borgehalte sind kritisch, da diese zu unerwünschten Borausscheidungen führen können, welche einen Versprödungseffekt haben. Das Zusammenspiel von Bor mit den anderen Bestandteilen, insbesondere mit Ta (im Bereich von 0.001-0.07 Gew.- %) führt zu guten Festigkeitswerten, insbesondere beim Kriechen.

Ta wirkt als Ausscheidungsverfestiger und erhöht die Hochtemperaturfestigkeit. Werden mehr als 0.07 Gew.- % Ta eingestellt, wird dagegen nachteilig der Oxidationswiderstand verringern.

Si ist ein Element, welches im angegebenen Bereich von 0.2-0.3 Gew.- % dafür sorgt, dass der Schweisszusatzwerkstoff eine verbesserte Schmelzfähigkeit aufweist. Bei Verwendung des erfindungsgemässen Schweisszusatzwerkstoffes wird daher das Schweissgut flüssiger und das Schweissen ist einfacher durchführbar. Zusätzlich wird die Oxidationsbeständigkeit erhöht, allerdings wird nachteilig durch die Zugabe von Si die Bildung von unerwünschten spröde machenden Phasen im Material verstärkt.

Mn ist ein austenitstabilisierendes Element. Es erhöht im angegebenen Bereich von 0.5-1.5 Gew.- %, vorzugsweise 1 Gew. -%, die Zähigkeit des Materials.

Ni ist ebenfalls ein austenitstabilisierendes Element. Die im Vergleich zu den aus dem Stand der Technik bekannten Materialien erhöhten Ni-Gehalte von 3-4 Gew.- %, vorzugsweise 4 Gew. -%, führen zu einer extremen Erhöhung der Zähigkeit des Schweisszusatzwerkstoffes ohne dass die Zeitstandfestigkeit und die Festigkeit bei Raumtemperatur signifikant absinken. Ni-Gehalte oberhalb von 6 Gew.- % wirken sich aber negativ auf das Zeitstandverhalten aus, so dass dieser Wert nicht überschritten werden soll.

Mo und V sind Karbidbildner und wirken sich bei Zugabe in den beanspruchten Bereichen (0.5-1.9 Gew.- % Mo, vorzugsweise 1.7 Gew. -% Mo und 0.2-0.4 Gew.- % V, vorzugsweise 0.35 Gew.- % V) positiv auf den Oxidationswiderstand aus.

Selbst sehr geringe Mengen an Pd (max. 60 ppm, vorzugsweise 10 ppm) können dazu beitragen, die Festigkeit zu erhöhen, weil Pd ein Mischkristallverfestiger ist und ausserdem die Oxidationsbeständigkeit verbessert.

Durch die Zugabe von 0.01 - 0.06 Gew. -%, vorzugsweise 0.04 Gew. - % N wird erreicht, dass sich VN bildet, welches sehr stabil ist und einen günstigen Einfluss hat auf das Kriechverhalten, also die Zeitstandfestigkeitseigenschaften des Materials. In Verbindung mit den erhöhten Ni-Gehalten des erfindungsgemässen Schweisszusatzwerkstoffes ergibt dies im Vergleich zum aus dem Stand der Technik bekannten Material eine bessere Kombination von hoher Zähigkeit gepaart mit einem sehr guten Zeitstandsverhalten.

### Kurze Beschreibung der Zeichnungen

In der Zeichnung sind Ausführungsbeispiele der Erfindung dargestellt. Es zeigen:
- Fig. 1: die Streckgrenze und Zugfestigkeit als Balkendiagramme für einige der untersuchten Legierungen;
- Fig. 2: die Bruchdehnung als Balkendiagramme für die gleichen untersuchten Legierungen wie in Fig. 1;
- Fig. 3: die Bruchzeit bei 600°C/160 MPa als Balkendiagramm für einige der untersuchten Legierungen und
- Fig. 4: Ergebnisse von Kerbschlagbiegeversuchen bei Raumtemperatur.

### Wege zur Ausführung der Erfindung

Nachfolgend wird die Erfindung anhand von Ausführungsbeispielen und den Zeichnungen näher erläutert.

Es wurden die aus dem Stand der Technik bekannte kommerzielle Legierung SZW 3001 und die Legierung SZWX3 gemäss EP 2 221 393 A1 als Vergleichslegierungen herangezogen sowie die erfindungsgemässen Materialien SZWX5-7. Die chemischen Zusammensetzungen (Angaben in Gew. -%) sind in der nachfolgenden Tabelle 1 aufgeführt:

**Tabelle 1: Chemische Zusammensetzung der untersuchten Legierungen**

| | **SZW3001** | **SZWX3** | **SZWX5-7** |
|---|---|---|---|
| **Fe** | Rest | Rest | Rest |
| **Cr** | 12 | 12 | 10 |
| **Ni** | 2.3 | 2.3 | 4 |
| **Mn** | 1 | 1 | 1 |
| **Si** | 0.4 | 0.4 | 0.27 |
| **C** | 0.12 | 0.12 | 0.12 |
| **Mo** | 1.7 | 1.7 | 1.7 |
| **V** | 0.35 | 0.35 | 0.35 |
| **B** | - | - | 0.01 |
| **Re** | - | 3 | 2.25 |
| **Ta** | - | 0.01 | 0.001 |
| **N** | 0.002 | 0.002 | 0.04 |
| **P** | < 0.025 | < 0.025 | < 0.025 |
| **S** | < 0.02 | < 0.02 | < 0.02 |
| **Pd** | 0 | 0.005 | 0.001 |

Die erfindungsgemässen Legierungen wurden folgendermassen hergestellt: Sie wurden als Blöcke mit ca. 50 mm Durchmesser in einem Lichtbogenofen mehrere Male geschmolzen. Anschliessend wurden sie einer Spannungsarmglühung (610 °C/6 h/ Ofenabkühlung) unterzogen. Danach wurden übliche Zug- und Zeitstandproben daraus hergestellt, sowie Kleinstproben 3mmx4mmx27mm für Kerbschlagbiegeversuche mit einer V-Kerbe und einer Kerbtiefe von 1 mm, einem Kerbradius 0.1 mm und einem Öffnungswinkel der Kerbe von 60°.

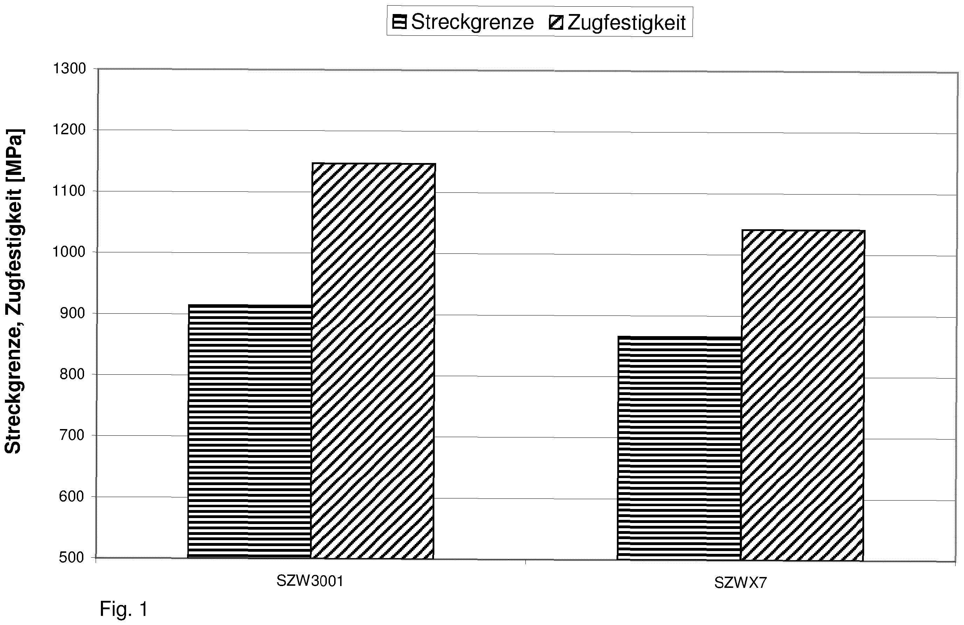

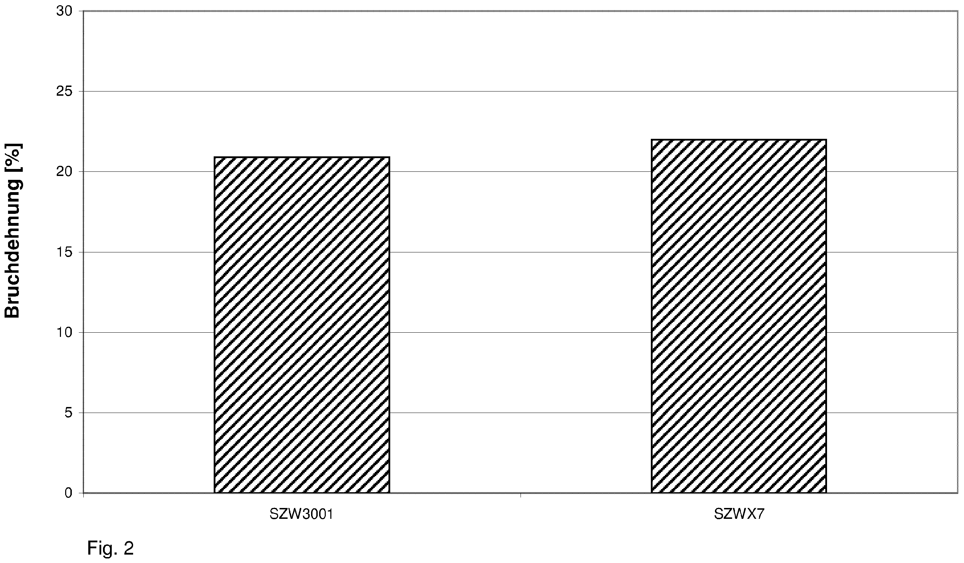

In Fig. 1 und Fig. 2 sind für das Vergleichsmaterial SZW3001 und den erfindungsgemässen Schweisszusatzwerkstoff SZWX7 die Ergebnisse der Zugversuche bei Raumtemperatur für das Schweissgut dargestellt.

Fig. 1 zeigt jeweils die Streckgrenze (waagerechte Schraffur) und die Zugfestigkeit (diagonal Schraffur) als Balkendiagramme. Zwar weist die erfindungsgemässe Legierung SZWX7 gegenüber dem bisher benutzten Schweisszusatzwerkstoff SZW3001 und dem aus EP 2 221 393 A1 bekannten Schweisszusatzwerkstoff SZWX3 (nicht in den Fig. 1 und 2 dargestellt) einen geringen Festigkeitsabfall auf. So ist die Streckgrenze von 914 auf 865 MPa und die Zugfestigkeit von 1147 bzw. 1143 MPa auf 1041 MPa gefallen, aber im Gegenzug ist dafür die Bruchdehnung erwartungsgemäss auf 22 % gegenüber 20,9 bzw. 18,5 % angestiegen (siehe Fig. 2).

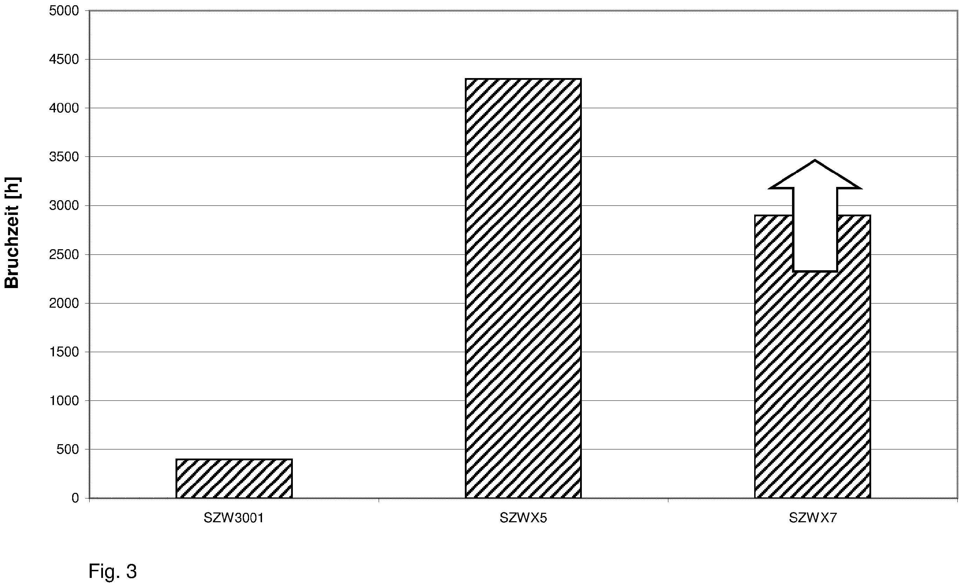

Fig. 3 zeigt das Zeitstandverhalten des Schweissgutes. Hier ist die Bruchzeit bei 600°C unter einer Belastung von 160 MPa als Balkendiagramm für die untersuchten Materialien dargestellt. Die untersuchten erfindungsgemässen Proben haben vorteilhaft wesentlich bessere Zeitstandfestigkeitseigenschaften als die aus dem Stand der Technik bekannten SZW 3001 und SZWX3 (letztere ist nicht in Fig. 3 dargestellt). Am deutlichsten ist dieser Vorteil bei der Probe SZWX5 ausgeprägt. Sie hat bei den o.g. Bedingungen mehr als ca. 11 x so lange gehalten (4300 h) wie die Vergleichsproben aus SZW3001 (396 h) und ca. 5x wie die aus SZWX3 hergestellte Vergleichsprobe (838 h). Die SWX7-Probe lässt auf ein ähnliches Verhalten schliessen, denn nach 3400 Stunden Beanspruchung unter den oben genannten Bedingungen ist sie immer noch nicht gebrochen, wie durch den Pfeil in Fig. 3 verdeutlicht wird.

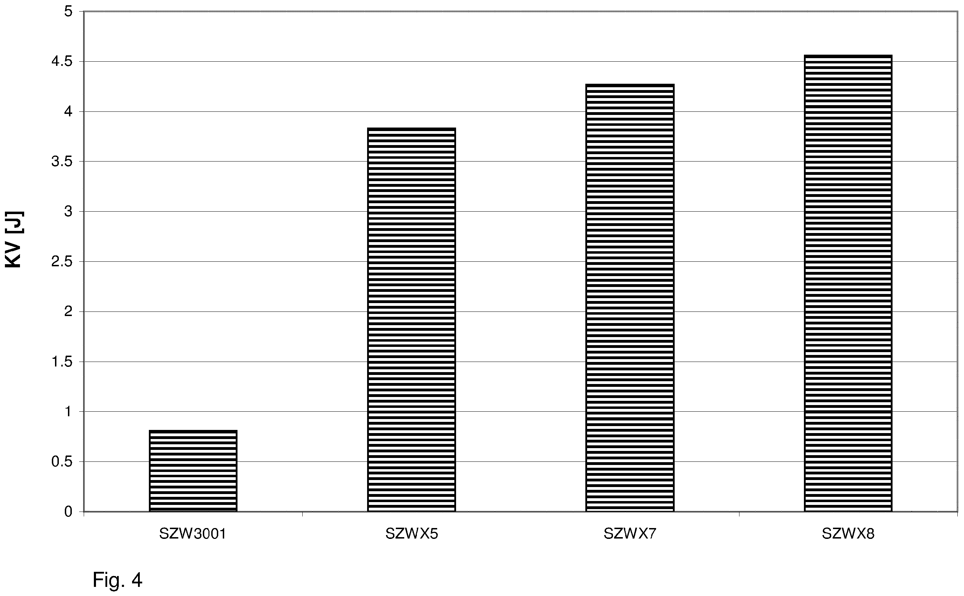

Schliesslich ist in Fig. 4 für verschiedene Materialien die an Kleinstproben bei Raumtemperatur ermittelte Kerbschlagarbeit für das Schweissgut dargestellt. Für die aus dem erfindungsgemässen Schweisszusatzmaterial hergestellten Proben wurde eine ca. fünfmal so hohe Kerbschlagarbeit ermittelt wie für die Vergleichsprobe SZW3001.

Diese sehr gute Kombination der Eigenschaften (hervorragende Zähigkeitseigenschaften bei sehr gutem Zeitstandverhalten und nur geringfügiger Festigkeitseinbusse) wird durch die angegebenen Kombinationen der verschiedenen Legierungselemente erzielt.

Das ist zum grossen Teil darauf zurückzuführen, dass diese Legierung neben den Bestandteilen des aus dem Stand der Technik bekannten Schweisszusatzwerkstoffes SZW 3001 zusätzlich einerseits noch 1-3 Gew.-, insbesondere 2.25 Gew.- %Re, und andererseits 0.01 Gew. -% B enthält. Das Rhenium wirkt hier als ein sehr guter Mischkristallverfestiger, während Bor die Karbide stabilisiert und ihre Vergröberung reduziert. Beide Mechanismen verbessern die Zeitstandfestigkeit des Schweissgutes. Ausserdem wird die Zeitstandsfestigkeit erhöht durch die Bildung von VN, das durch die Zugabe von N im Bereich von 0.01 bis 0.06, vorzugsweise 0.04 Gew.- %, gebildet wird. Durch die Erhöhung des Ni-Anteils, vorzugsweise auf 4 Gew.- %, werden die Zähigkeitseigenschaften, insbesondere die Kerbschlagzähigkeit, sehr verbessert. Allerdings sollte der Gehalt an Nickel 6 Gew. -% nicht übersteigen, weil sonst auf Grund von Austenitbildung das Gefüge nicht optimal ist und daher die Zeitstandfestigkeit nachteilig abfällt.

Das untersuchte erfindungsgemässe Material zeichnet sich durch eine sehr gute Schmelzfähigkeit aus, so dass bei seiner Verwendung als Schweisszusatzwerkstoff das Schweissgut flüssiger wird und das Schweissen ist einfacher durchführbar. Zusätzlich ist vorteilhaft eine erhöhte Oxidationsbeständigkeit vorhanden, so dass er bevorzugt zum Schweissen von Gasturbinenrotoren eingesetzt werden kann.
Selbstverständlich ist die Erfindung nicht auf die beschriebenen Ausführungsbeispiele beschränkt, siehe Ansprüche.

## Patentansprüche

1. Schweisszusatzwerkstoff **gekennzeichnet durch** folgende chemische Zusammensetzung (Angaben in Gew.- %):
0.05-0.15 C,
10 Cr,
3-4 Ni,
0.5-1.9 Mo,
0.5-1.5 Mn,
0.2-0.3 Si,
0.2-0.4 V,
0-0.04 B,
1-3 Re,
0.001-0.07 Ta,
0.01-0.06 N,
0-60 ppm Pd,
max. 0.25 P,
max. 0.02 S,
Rest Fe und herstellungsbedingte unvermeidbare Verunreinigungen.

2. Schweisszusatzwerkstoff nach Anspruch 1, **gekennzeichnet durch** 0.10-0.14, vorzugsweise 0.12 Gew. -% C.

3. Schweisszusatzwerkstoff nach einem der Ansprüche 1 bis 2, **gekennzeichnet durch** 1 Gew.- % Mn.

4. Schweisszusatzwerkstoff nach einem der Ansprüche 1 bis 3, **gekennzeichnet durch** 1.7 Gew.- % Mo.

5. Schweisszusatzwerkstoff nach einem der Ansprüche 1 bis 4, **gekennzeichnet durch** 2.25 Gew.- % Re.

6. Schweisszusatzwerkstoff nach einem der Ansprüche 1 bis 5, **gekennzeichnet durch** 0.005-0.2, vorzugsweise 0.01 Gew.- % B.

7. Schweisszusatzwerkstoff nach einem der Ansprüche 1 bis 6, **gekennzeichnet durch** 10 ppm Pd.

8. Schweisszusatzwerkstoff nach einem der Ansprüche 1 bis 7, **gekennzeichnet durch** 0.35 Gew. -% V.

9. Schweisszusatzwerkstoff nach einem der Ansprüche 1 bis 8, **gekennzeichnet durch** 0.001 Gew. -% Ta.

10. Schweisszusatzwerkstoff nach einem der Ansprüche 1 bis 9 **gekennzeichnet durch** 0.02-0.05, vorzugsweise 0.04 Gew. -% N.

## Claims

1. Welding filler material, **characterised by** the following chemical composition (data in w.%):
0.05-0.15 C,
10 Cr,
3-4 Ni,
0.5 - 1.9 Mo,
0.5 - 1.5 Mn,
0.2 - 0.3 Si,
0.2 - 0.4 V,
0 - 0.04B,
1 - 3 Re,
0.001 - 0.07 Ta,
0.01 - 0.06 N,
0 - 60 ppm Pd,
max. 0.25 P,
max. 0.02 S,
remainder Fe and impurities unavoidably caused in production.

2. Welding filler material according to claim 1, **characterised by** 0.10 - 0.14, preferably 0.12 w.% C.

3. Welding filler material according to one of claims 1 to 2, **characterised by** 1 w.% Mn.

4. Welding filler material according to any of claims 1 to 3, **characterised by** 1.7 w.% Mo.

5. Welding filler material according to any of claims 1 to 4, **characterised by** 2.25 w.% Re.

6. Welding filler material according to any of claims 1 to 5, **characterised by** 0.005 - 0.2, preferably 0.01 w.% B.

7. Welding filler material according to any of claims 1 to 6, **characterised by** 10 ppm Pd.

8. Welding filler material according to any of claims 1 to 7, **characterised by** 0.35 w.% V.

9. Welding filler material according to any of claims 1 to 8, **characterised by** 0.001 w.% Ta.

10. Welding filler material according to any of claims 1 to 9, **characterised by** 0.02 - 0.05, preferably 0.04 w.% N.

## Revendications

1. Métal d'apport de soudage, **caractérisé par** la composition chimique suivante (indications en % en poids) :
0,05-0,15 C,
10 Cr,
3-4 Ni,
0,5-1,9 Mo,
0,5-1,5 Mn,
0,2-0,3 Si,
0,2-0,4 V,
0-0,04 B,
1-3 Re,
0,001-0,07 Ta,
0,01-0,06 N,
0-60 ppm Pd,
max. 0,25 P,
max. 0,02 S,
le reste étant constitué de Fe et des impuretés inévitables dues au mode de fabrication.

2. Métal d'apport de soudage selon la revendication 1, **caractérisé par** 0,10-0,14, de préférence 0,12 % en poids de C.

3. Métal d'apport de soudage selon l'une des revendications 1 à 2, **caractérisé par** 1 % en poids de Mn.

4. Métal d'apport de soudage selon l'une des revendications 1 à 3, **caractérisé par** 1,7 % en poids de Mo.

5. Métal d'apport de soudage selon l'une des revendications 1 à 4, **caractérisé par** 2,25 % en poids de Re.

6. Métal d'apport de soudage selon l'une des revendications 1 à 5, **caractérisé par** 0,005-0,2, de préférence 0,01 % en poids de B.

7. Métal d'apport de soudage selon l'une des revendications 1 à 6, **caractérisé par** 10 ppm de Pd.

8. Métal d'apport de soudage selon l'une des revendications 1 à 7, **caractérisé par** 0,35 % en poids de V.

9. Métal d'apport de soudage selon l'une des revendications 1 à 8, **caractérisé par** 0,001 % en poids de Ta.

10. Métal d'apport de soudage selon l'une des revendications 1 à 9, **caractérisé par** 0,02-0,05, de préférence 0,04 % en poids de N.
